(19) Europäisches Patentamt
European Patent Office
Office européen des brevets

(11) Publication number: 0 241 821 B1

(12) # EUROPEAN PATENT SPECIFICATION

(45) Date of publication of the patent specification: 17.01.90

(51) Int. Cl.⁴: C 09 B 62/51, C 09 B 67/22, C 09 B 67/24

(21) Application number: 87104979.7

(22) Date of filing: 03.04.87

(54) **Water-soluble yellow monoazo dyestuff mixtures and their use for dyeing carbonamide and/or hydroxy groups containing materials.**

(30) Priority: 07.04.86 US 848888

(43) Date of publication of application: 21.10.87 Bulletin 87/43

(45) Publication of the grant of the patent: 17.01.90 Bulletin 90/03

(84) Designated Contracting States: BE CH DE ES FR GB IT LI

(56) References cited:
EP-A-0 122 599
FR-A-1 521 874
FR-A-2 226 440

(73) Proprietor: HOECHST CELANESE CORPORATION
Route 202-206 North
Somerville, N.J. 08876 (US)

(72) Inventor: Phillips, Thomas S.
62 West Warwick Avenue
West Warwick, RI 02893 (US)
Inventor: Corso, Anthony J. c/o Hoechst Celanese Corp.
Route 202-206 North
Somerville, New Jersey 08876 (US)

(74) Representative: Kockläuner, Reinhard, Dr.
HOECHST AKTIENGESELLSCHAFT Zentrale Patentabteilung Postfach 80 03 20
D-6230 Frankfurt am Main 80 (DE)

EP 0 241 821 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

LIBERGRAF, STOCKHOLM 1990

## Description

This invention relates to water-soluble mixtures of water-soluble, fiber-reactive, yellow azo dyestuffs, which h superior colour yield and improved build-up properties. Colour yield as used in this specification is the ' of colour spectrally measured in standard colour density units imparted by the dyestuff to a fabric c substrate. Build-up is the ability of a dyestuff to continue to yield deeper or darker shades of a colour a concentration of the dyestuff in the dye bath is increased which is also expressed in colour density units.

Typically, the colour yield of an admixture of azo-dyestuffs is proportional to the colour yield and the amou of the components in the mixture. In general the colour yield of a mixture will not exceed the colour yield o the strongest component of the mixture. Surprisingly, we have found that the colour yield of the azo dyestuff mixtures of this invention are significantly higher than the colour yield of individual components. Secondly, these mixtures of the invention have improved build-up properties over the individual components.

An exception to this general rule is already reported in British Patent Specification 2 108 141 wherein certain mixtures of blue monoazo dyes, which, however, represent disperse dyes, are reported having good build-up properties and high tinctorial strength superior to the effect achieved by the application of any single component of the dye mixture. Also U.S. Patent Specification No. 4 548 613 reports that certain mixtures of yellow monoazo disperse dyes (C.I. Disperse Yellow 54 and 64) produce dyeings of high tinctorial strength and high dye bath exhaustion, and U.S. Patent Specification No. 4 427 413 discloses other mixtures of these same disperse dyes with improved build-up and better yields in transfer printing. Although these except ions to the general rule report improved higher color yield or other improved properties they are exceptions.

According the present invention, it has now been found water-soluble compositions (mixtures) of fiber-reactive, yellow azo dyestuffs, comprising a first and a second azo dyestuff conforming to the general formula (1)

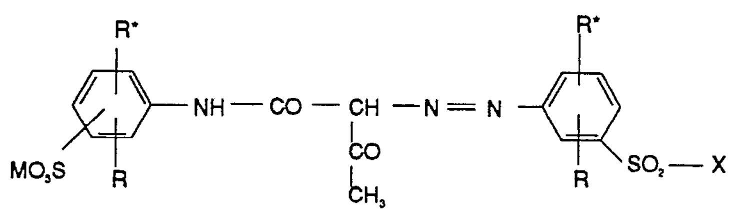

(1)

wherein

R* is each independently alkoxy of 1 to 4 carbon atoms,
R is each independently selected from alkyl of 1 to 4 carbon atoms and alkoxy of 1 to 4 carbon atoms with the proviso that at least one of said R moieties is selected from alkyl of 1 to 4 carbon atoms in at least one of said both dyestuffs,
X is vinyl or is a group of the general formula $-CH_2-CH_2-Z$, in which
Z is chlorine, bromine, sulfato, thiosulfato, phosphato or alkyl-amino with an alkyl of 1 to 4 carbon atoms, or dialkyl-amino with alkyls each having independently 1 to 4 carbon atoms, and
M is hydrogen or preferably an alkali metal, such as sodium, potassium or lithium,

which compositions (mixtures) according to the invention of said first and second dyestuffs have, upon application on materials as indicated below, a superior colour yield value than the individual first or second dyestuff of the mixture and improved build-up properties, as indicated at the begin of the instant specification.

The moiety X in said dyestuffs is preferably vinyl or in particular β-sulfatoethyl.

The terms sulfo, sulfato, thiosulfato and phosphato (respectively sulfo group, sulfato group, thiosulfato group and phosphato group) means groups of the general formula $-SO_3M$, respectively $-OSO_3M$ or $-S-SO_3M$ or $-OPO_3M_2$, in which M is defined as above

The ring substituents in the above general formula (1) may be selectively positioned on the rings readily apparent to one skilled in the art. Preferably, the substituents R* are in the 2- and 2'-positions and the substituents R are in the 5- and 5'-position and the $MO_3S$- and $-SO_2-X$ moieties in the 4- and 4'-positions, respectively. Other illustrative isomers have the following ring positions:

R* in 2- and 2'- and R in 5- and 5'- and $MO_3S$- and $-SO_2-X$ in 3- and 3'-positions, respectively;
R* in 2- and 2'- and R in 4- and 4'- and $MO_3S$- and $-SO_2-X$ in 5- and 5'-positions, respectively;
R* in 3- and 3'- and R in 5- and 5'- and $MO_3S$- and $-SO_2-X$ in 2- and 2'-positions, respectively;
R* in 2- and 2'- and R in 4- and 5'- and $MO_3S$- and $-SO_2-X$ in 5- and 3'-positions, respectively.

However, regardless of the isomeric position of the ring substituents, the acetoacetamide-azo chromophore of general

formula (1) will give a yellow dyestuff. The shade or tone of the yellow dyestuff being dependent upon the type and position of the ring substituents.

The azo dyestuff mixtures of this invention are useful in colouring and printing fibers and other materials, such as leather, which contain carbonamide (-CO-NH-) and/or hydroxy (-OH) groups. They provide brilliant yellow shades, in particular on cellulosic materials, and the dyeings show improved color yield, build-up and fastness properties.

The individual dyestuffs are known from U.S. Patent Specification No. 3 519 616 and from European Application Publication No. 0 122 599 A or may be prepared analogously and in conventional manner, such as by coupling a n-acetoacetyl derivative of an alkyl and/or alkoxy substituted aniline sulfonic acid with the corresponding diazotized, fiber-reactive aniline. The coupling reaction is carried out under conventional conditions for the preparation of fiberreactive azo compounds, e.g. in an aqueous medium, at a temperature between 0°C and 30°C, preferably 5°C and 15°C, and at a pH between 3 and 8, preferably between 4 and 7. Although the following Examples use the procedure of preparing each dyestuff separately and then mixing the components, it is apparent that the diazotization and coupling reactions can be sequentially conducted in admixture.

After preparation, the dyestuff may be isolated as a powder, either by salting it out of solution or by spray drying, and brought to standard strength by the addition of an inorganic salt. Advantageously, the prepared dyestuff may be recovered as a liquid composition which can be brought to a standard strength by the addition of water. Alternatively, the standardization of the dyestuff mixture may be carried out after mixing the individual components.

Preferred mixtures of this invention are as follows, containing dyestuffs of the following formulae (in which M are defined above, preferably being Na or K):

**Mixtures I**

comprising Dyestuffs (A) and (B):

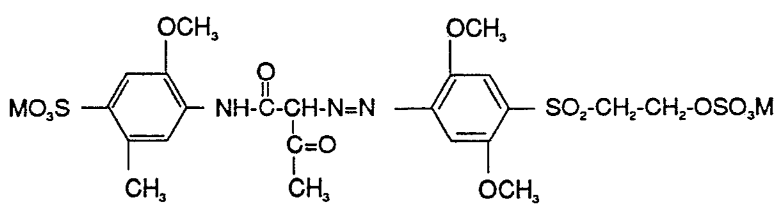

(A)

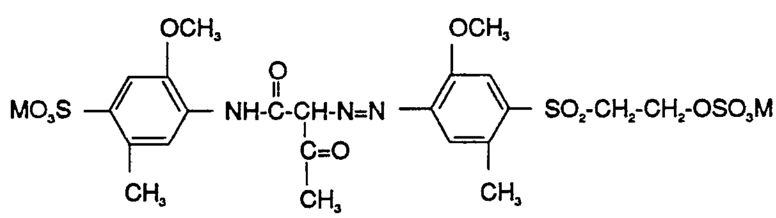

(B)

**Mixtures II**

comprising Dyestuffs (A) and (C):

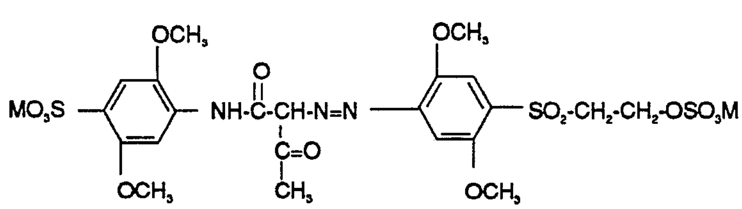

(C).

These dyestuff mixtures (Mixtures I and Mixtures II) may contain 95 % to 5 % by weight of Dyestuff (A) and 5 % to 95 % by weight of Dyestuff (B), preferably 80 % to 20 % by weight of Dyestuff (A) and most preferably 60 % to 40 % by weight of Dyestuff (A).

The dyestuff percentages are calculated on the total amount of both Dyestuffs (A) and (B).

It also is understood that the mixed dyestuffs of this invention may be used in conjunction with other dyes. Another preferred mixture of the invention is

**Mixture III**

comprising Dyestuffs (B) and (C):

In Mixture III, Dyestuff (B) may be present in an amount of 95 to 80 % by weight, preferably 90 % to 80 % by weight and most preferably 87 to 83 % by weight, calculated on the total amount on both Dyestuffs (B) and (C). However, when the concentration of Dyestuff (B) is reduced to less than about 80 % by weight a determinmental effect in colour yield is observed.

The dyestuff mixtures of this invention may also be prepared and used as liquid dyestuff solutions of standard colour strength. Preferably, these liquid dyestuff compositions should be adjusted to a pH of about 2.5 to about 4.5 to provide maximum storage stability and dye performance properties. These compositions also should be substantially free of buffer substances. Further embodiments of the invention are thus aqueous liquid dyestuff compositions, particularly comprising 25 to 50 % by weight of a mixture of dyestuffs of formula (1) wherein the substituents R* are in the 2- and 2'-positions and the substituents R are in the 5- and 5'-position, the group $-SO_2-X$ is in the 4'-position and the group $-SO_3M$ in the 4-position, preferably of the above mentioned Mixtures I, II and III, and 50 to 75 % by weight of water, and having a pH of about 2.5 to 4.5 and being substantially free of buffer substances.

The dyestuff mixtures of the present invention are in particular suitable for the dyeing of cellulosic materials, such as cotton, linen, viscose rayon and staple fibers. They can be applied by any one of the usual dyeing and printing methods for fibre-reactive dyestuffs and they yield on cellulosic materials, in the presence of alkaline agents, brilliant yellow shades having excellent fastness properties, and particularly superior colour yield and build-up in both exhaust and continuous dyeings. The present dyestuff mixtures may also be used on other fibers containing reactive groups e.g. wool, silk or polyamide fibers.

The following Examples further illustrate this invention. The percentages and parts are by weight unless noted otherwise.

**Example 1**

This Example illustrates the preparation of Dyestuff (B):

65.0 parts of 4-β-sulfatoethylsulfonyl-2-methoxy-5-methylaniline were dissolved in 200 parts of water at 35°C and at a pH of 5.5 to 6.0 by the addition of 13 parts of sodium carbonate. The resulting solution was cooled to 0 to 5°C with ice, and 50 parts of 31 hydrochloric acid were acid. The slurry was diazotized by the addition of 35 parts of an aqueous 39.5 % sodium nitrite solution. The excess nitrite was decomposed by the addition of 1 part of sulfamic acid. 10 parts of a conventional filter aid were added and the diazo solution was clarified and added to an aqueous solution containing 60.2 parts of 2-methoxy-5-methyl-4-sulfo-acetoacetanilide while maintaining the pH at 4.5 to 5.0 by the addition of 15 parts of sodium carbonate. The resulting dyestuff solution was warmed to 50°C and the dyestuff salted out by the addition of 300 parts of sodium chloride. After filtration and drying, 143.1 parts of a dyestuff product were obtained containing 89.5 % of Dyestuff (B) (the residual parts representing mainly electrolyte salts such as sodium chloride). The 143.1 parts so obtained were blended with 77.0 parts of anhydrous sodium sulfate to yield 220.1 parts of dyestuff powder having a conventional standard strength (content of Dyestuff (B): 58.2 %).

**Example 2**

This Example illustrates the preparation of Dyestuff (A):

68.2 parts of 4-β-sulfatoethylsulfonyl-2,5-dimethoxyaniline were dissolved in 320 parts of water at a pH of 6.0 to 6.5 by the addition of 14 parts of sodium carbonate. 28 parts of kieselguhr, 8 parts of Fuller's Earth and 4 parts of activated charcoal were added and the solution clarified. The filter cake was washed with 100 parts of water. 28 parts of a 93 % sulfuric acid were added, the solution iced to 0 to 5°C and diazotized with 33.8 parts of an aqueous 40.1 % sodium nitrite solution. The excess nitrite was decomposed by the addition of 1 part of sulfamic acid. The diazo solution was then added to a solution containing 56 parts of 2-methoxy-5-methyl-4-sulfo-acetoacetanilide while maintaining the pH at 4 to 5 by the addition of 16 parts of sodium carbonate. The resulting solution was spray dried to yield 188.3 parts of dyestuff product containing 70.3 % of Dyestuff (A). The 188.3 parts of dyestuff so obtained were blended with 125.5 parts of anhydrous sodium sulfate to yield 313.8 parts of dyestuff powder of a conventional standard strength (content

of Dyestuff (A): 42.2 %).

**Example 3**

This Example illustrates the preparation of the yellow monoazo Dyestuff (C):

102.3 parts of β-sulfatoethylsulfonyl-2,5-dimethoxyaniline were dissolved in 480 parts of water by the addition of 20.4 parts of sodium carbonate. 42 parts of kieselguhr, 12 parts of Fuller's Earth and 6 parts of activated charcoal were added and the solution clarified. The filter cake was washed with 150 parts of water. 42 parts of 93 % sulfuric acid were added, the solution cooled to 0 to 5°C with ice, and diazotized by the addition of 51 parts of an aqueous 40 % sodium nitrite solution. The excess nitrite was decomposed by the addition of 1 part of sulfamic acid. The diazo solution was then added to a solution containing 88.8 parts of 2,5-dimethoxy-4-sulfo-acetoacetanilide and maintaining the pH at 4 to 5 by the addition of 28 parts of sodium carbonate. The resulting solution was spray dried to yield 300 parts of dyestuff product with 65.7 % of Dyestuff (C). The 300 parts so obtained were blended with 200 parts of sodium chloride to yield 500 parts of dyestuff powder of a conventional standard strength (content of Dyestuff (C): 39.4 %).

**Examples 4 to 6**

The following Examples 4 to 6 were prepared by mixing the dyestuff powders of adjusted standard strength of Examples 1 to 3 in the proportions indicated and applied to test fabrics using a standard exhaust dyeing procedure. The colour yield on the dyed test fabrics were analyzed using a spectrophotometer, computer assisted system and determined in colour density units. The colourant reported in the Examples is weight percent of dyestuff of standard colour strength based upon the weight of the test fabric in the dye bath.

The following exhaust dyeing procedure was used in preparing the dyed specimens upon which colour measurements were determined. A 20 : 1 boiled-off, cotton yarn knitted into socks was used as the fabric. Prior to dyeing the fabric was scoured in an aqueous solution of a commercial scouring agent at a concentration of 0.5 grams per liter for 5 minutes at the boil and rinsed with hot water.

A dye bath solution was prepared at 80°F (about 27°C). It contained 1.0 % based upon the weight of the test fabric of a polyphosphate sequestering agent of the neutral type, common salt, soda ash, caustic soda, and dyestuff. The dyeings were conducted a 1 : 10 liquor ratio.

An amount of salt (sodium chloride), soda ash and caustic soda were added in each dyeing depending on the total concentration of the dyestuff in the dye bath according to the following schedule:

| % Dye | Salt* | Soda Ash* | Caustic Soda** |
|---|---|---|---|
| 0.01 - 0.10 | 25.00 | 3.00 | 0 |
| 0.11 - 0.20 | 25.00 | 5.00 | 0 |
| 0.21 - 0.50 | 50.00 | 2.00 | 0.50 |
| 0.51 - 2.00 | 75.00 | 3.00 | 1.50 |
| 2.01 - 4.00 | 100.00 | 5.00 | 2.50 |

* grams/liter, ** 50 % strength, grams/liter

The dye bath solution and test specimen were sealed in metal cans, heated to 140°F (60°C) under agitation at a rate of 2°F (1°C) per minute and held at 140°F (60°C) for 45 minutes. After completing the 45 minutes-dyeing period, the specimens were rinsed with cold running tap water until bleeding stopped. They were then neutralized with a 1 % solution of acetic acid (56 % strength) for one minute at 160°F (about 70°C), washed with a 0.25 % soap solution for 3 minutes at 200 - 210°F (93 - 99°C), rinsed for five minutes at 160°F and dried. The term liquor ratio as used in the foregoing description is the weight ratio of fabric to dye bath solution.

Dyeings were prepared by the foregoing procedure using the individual component dyestuffs and mixtures of the dyestuffs. The results are as follows. Colour yield is reported in colour density units (CDU). The actual dye content of the colourants used in the following Examples were as follows:

Ex. 1 Dye - 58.2 %; Ex. 2 Dye - 42.2 %; Ex. 3 Dye - 39.4 %.

**Example 4**

Colour Yield

| % Colourant | Example 2 Dye | Example 1Dye | 50 : 50 Mix |
|---|---|---|---|
| 1 | 0.251 | 0.308 | 0.275 |
| 2 | 0.436 | 0.469 | 0.497 |

| | | | |
|---|---|---|---|
| 4 | 0.638 | 0.505 | 0.732 |
| 6 | 0.766 | 0.558 | 0.916 |
| 8 | 0.759 | 0.578 | 0.938 |
| 10 | 0.706 | 0.560 | 0.935 |

**Example 5**

Colour Yield

| % Colourant | Example 2 Dye | Example 3 Dye | 50 : 50 Mix |
|---|---|---|---|
| 1 | 0.202 | 0.211 | 0.208 |
| 2 | 0.382 | 0.271 | 0.337 |
| 4 | 0.591 | 0.355 | 0.567 |
| 6 | 0.654 | 0.434 | 0.272 |
| 8 | 0.681 | 0.399 | 0.817 |
| 10 | 0.683 | 0.458 | 0.858 |

**Example 6**

Colour Yield

| % Colourant | Example 1 Dye | Example 3 Dye | 80 : 20 Mix |
|---|---|---|---|
| 1 | 0.347 | 0.248 | 0.320 |
| 2 | 0.482 | 0.384 | 0.539 |
| 4 | 0.531 | 0.503 | 0.685 |
| 6 | 0.631 | 0.565 | 0.777 |
| 8 | 0.641 | 0.581 | 0.809 |
| 10 | 0.609 | 0.552 | 0.825 |

**Examples 7 to 9**

The following Examples 7 to 9 were at a 4 % dyestuff concentration, and Example 10 at a 2 % dyestuff concentration, using varying percentages of the individual components in an exhaust dyeing.

**Example 7**

| % Example 2 Dye | % Example 1 Dye | Colour Yield |
|---|---|---|
| 100 | 0 | 0.672 |
| 80 | 20 | 0.741 |
| 60 | 40 | 0.807 |
| 50 | 50 | 0.871 |
| 40 | 60 | 0.907 |
| 20 | 80 | 0.713 |
| 0 | 100 | 0.513 |

**Example 8**

| % Example 2 Dye | % Example 3 Dye | Colour Yield |
|---|---|---|
| 100 | 0 | 0.754 |
| 80 | 20 | 0.797 |
| 60 | 40 | 0.837 |
| 50 | 50 | 0.813 |
| 40 | 60 | 0.772 |
| 20 | 80 | 0.730 |
| 0 | 100 | 0.507 |

**Example 9**

| % Example 1 Dye | % Example 3 Dye | Colour Yield |
|---|---|---|
| 100 | 0 | 0.677 |
| 80 | 20 | 0.844 |
| 60 | 40 | 0.314 |
| 50 | 50 | 0.244 |
| 40 | 60 | 0.246 |
| 20 | 80 | 0.265 |
| 0 | 100 | 0.593 |

**Example 10**

| % Example 1 Dye | % Example 3 Dye | Colour Yield |
|---|---|---|
| 100 | 0 | 0.455 |
| 80 | 20 | 0.564 |
| 60 | 40 | 0.190 |
| 50 | 50 | 0.175 |
| 40 | 60 | 0.171 |
| 20 | 80 | 0.224 |
| 0 | 100 | 0.374 |

**Claims**

1. A water-soluble mixture of monoazo dyestuffs comprising a first and a second azo dyestuff conforming to the general formula (1)

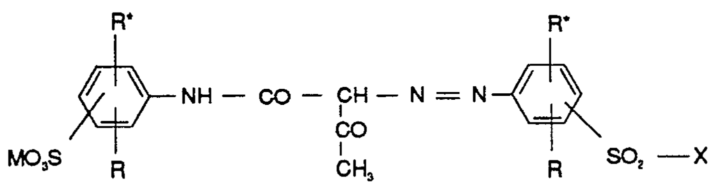

(1)

wherein

R* is each independently an alkoxy of 1 to 4 carbon atoms,
R is each independently selected from alkyl of 1 to 4 carbon atoms and alkoxy of 1 to 4 carbon atoms with the proviso that at least one of said R moieties is selected from alkyl of 1 to 4 carbon atoms in at least one of said both dyestuffs,
X is vinyl or is a group of the general formula $-CH_2-CH_2-Z$, in which
Z is chlorine, bromine, sulfato, thiosulfato, phosphato or alkyl-amino with an alkyl of 1 to 4 carbon atoms, or dialkyl-amino with alkyls each having independently 1 to 4 carbon atoms, and
M is hydrogen or preferably an alkali metal.

2. A dyestuff mixture according to Claim 1, wherein the moieties R* are in the 2- and 2'-positions and the moieties R are in the 5- and 5'-positions, the group $-SO_2-X$ is in the 4'-position and the group $MO_3S-$ in the 4-position.

3. A dyestuff mixture according to Claim 1 or 2, wherein Z is sulfato.

4. A dyestuff mixture according to Claim 1, wherein said first monoazo dyestuff has the formula (A)

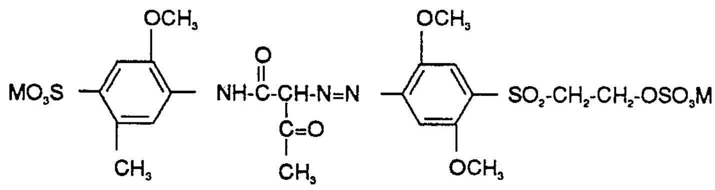

(A)

and said second monoazodyestuff has the formula (B)

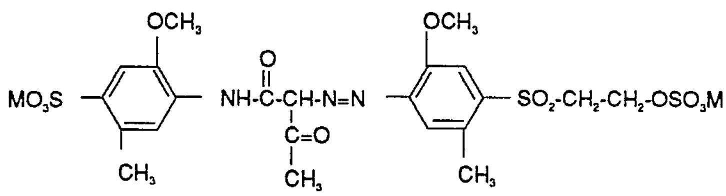

(B)

wherein M is defined as in Claim 1.

5. A dyestuff mixture according to Claim 1, wherein said first monoazo dyestuff has the formula (A)

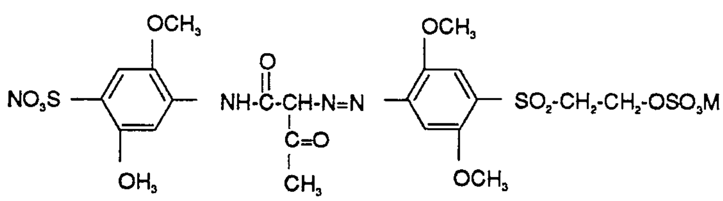

(A)

and said second monoazo dyestuff has the formula (C)

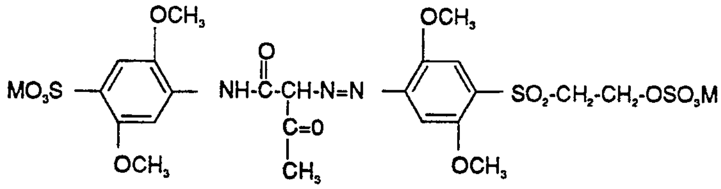

(C)

wherein M is defined as in Claim 1.

6. A dyestuff mixture according to Claim 1, wherein said first monoazo dyestuff has the formula (B)

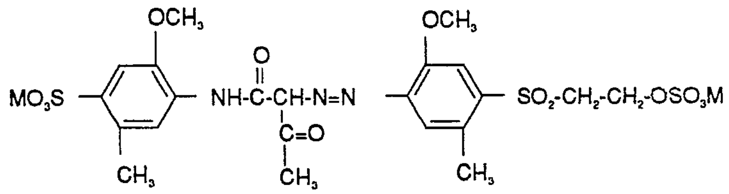

(B)

said second monoazo dyestuff has the formula (C)

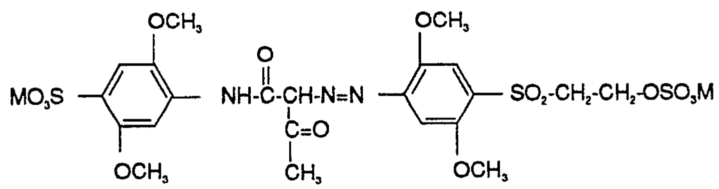

(C)

wherein M is defined as in Claim 1, and wherein Dyestuff (B) is present in an amount from 95 % to 80 % by weight, calculated of the total amount of (B) and (C).

7. A dyestuff mixture according to Claim 4, wherein said Dyestuff (A) is present in an amount from 80 % to 20 % by weight, calculated of the total amount of (A) and (B).

8. A dyestuff mixture according to Claim 4, wherein said Dyestuff (A) is present in an amount from 60 % to 40 % by weight, calculated of the total amount of (A) and (B).

9. A dyestuff mixture according to Claim 5, wherein said Dyestuff (A) is present in an amount from 80 % to 20 % by weight, calculated of the total amount of (A) and (C).

10. A dyestuff mixture according to Claim 5, wherein said Dyestuff (A) is present in an amount from 60 % to 40 % by weight, calculated of the total amount of (A) and (C).

11. A dyestuff mixture according to Claim 6, wherein said Dyestuff (B) is present in an amount from 90 % to 80 % by weight, calculated of the total amount of (B) and (C).

12. A dyestuff mixture according to Claim 6, wherein said Dyestuff (B) is present in an amount from 87 to 83 % by weight, calculated of the total amount of (B) and (C).

13. An aqueous liquid dyestuff composition comprising 25 to 50 weight % of a mixture of dyestuffs according to one or more of claims 2 to 12, and 50 to 75 % by weight of water, said liquid dyestuff composition having a pH of about 2.5 to 4.5 and being substantially free of buffer substances.

14. An aqueous liquid dyestuff composition comprising 25 to 50 % by weight of a mixture of dyestuffs according to Claim 4, and 50 to 75 % by weight of water, said liquid dyestuff composition having a pH of about 2.5 to 4.5 and being substantially free of buffer substances.

15. An aqueous liquid dyestuff composition comprising 25 to 50 % by weight of a mixture of dyestuffs according to Claim 5, and 50 to 75 % by weight of water, said liquid dyestuff composition having a pH of about 2.5 to 4.5 and being substantially free of buffer substances.

16. An aqueous liquid dyestuff composition comprising 25 to 50 % by weight of a mixture of dyestuffs according to claim 6, and 50 to 75 % by weight of water, said liquid dyestuff composition having a pH of about 2.5 to 4.5 and being substantially free of buffer substances.

**Revendications**

1. Mélange hydrosoluble de colorants monoazoïques, comprenant un premier et un second colorants azoïques répondant à la formule générale (1)

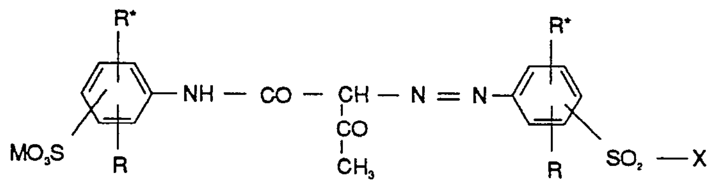

(1)

dans laquelle

chaque R* est indépendamment un groupe alcoxy de 1 à 4 atomes de carbone,
chaque R est indépendamment choisi parmi les groupes alkyle de 1 à 4 atomes de carbone et alcoxy de 1 à 4 atomes de carbone, à condition que l'un au moins des fragments R soit choisi parmi les groupes alkyle de 1 à 4 atomes de carbone dans l'un au moins des deux dits colorants,
X est le groupe vinyle ou un groupe de la formule générale $-CH_2-CH_2-Z$, dans laquelle
Z est le chlore, le brome ou un groupe sulfato, thiosulfato, alkylamino dont le groupe alkyle compte 1 à 4 atomes de carbone, ou dialkylamino dont chaque groupe alkyle compte indépendamment 1 à 4 atomes de carbone, et
M est l'hydrogène ou, de préférence, un métal alcalin.

2. Mélange de colorants selon la revendication 1, dans lequel les fragments R* sont aux positions 2 et 2' et les fragments R sont aux positions 5 et 5', le groupe $-SO_2-X$ est à la position 4' et le groupe $MO_3S-$ est à la position 4.

3. Mélange de colorants selon la revendication 1 ou 2, dans lequel Z est un groupe sulfato.

4. Mélange de colorants selon la revendication 1, dans lequel ledit premier colorant monoazoïque répond à la formule (A)

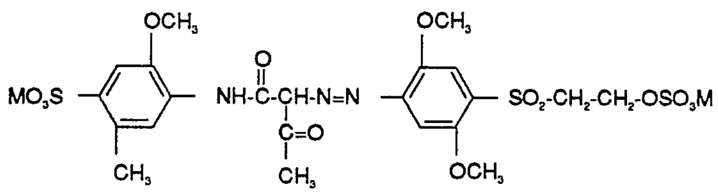

(A)

et ledit second colorant monoazoïque répond à la formule (B)

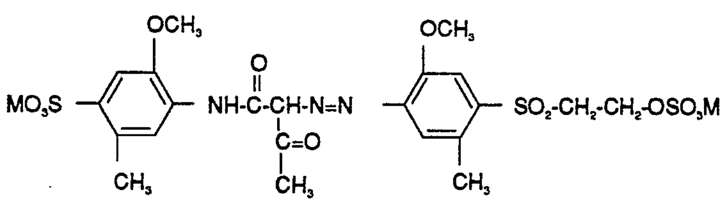

(B)

dans lesquelles M est tel que défini dans la revendication 1.

5. Mélange de colorants selon la revendication 1, dans lequel ledit premier colorant monoazoïque répond à la formule (A)

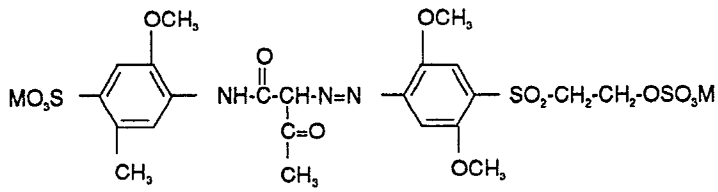

(A)

et ledit second colorant monoazoïque répond à la formule (C)

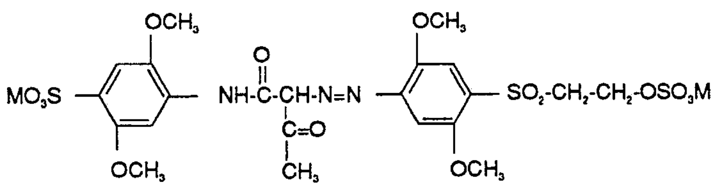

(C)

dans lesquelles M est tel que défini dans la revendication 1.

6. Mélange de colorants selon la revendication 1, dans lequel ledit premier colorant monoazoïque répond à la formule (B)

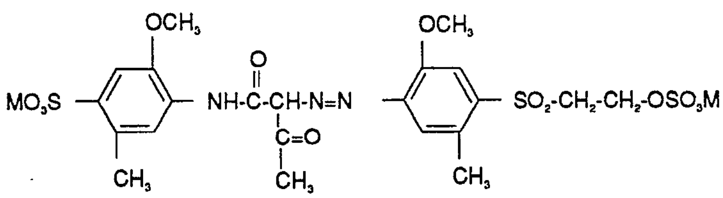

(B)

et ledit second colorant monoazoïque répond à la formule (C)

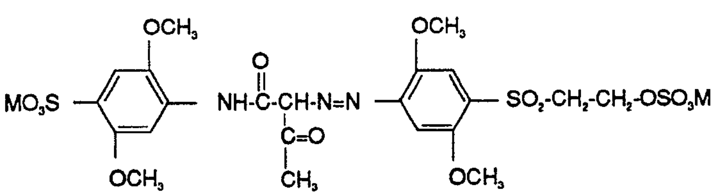

(C)

dans lesquelles M est tel que défini dans la revendication 1, et dans lequel le colorant (B) est présent en une proportion de 95 % à 80 % en poids, calculée par rapport à la quantité totale de (B) et (C).

7. Mélange de colorants selon la revendication 4, dans lequel ledit colorant (A) est présent en une proportion de 80 % à 20 % en poids, calculée par rapport à la quantité totale de (A) et (B).

8. Mélange de colorants selon la revendication 4, dans lequel ledit colorant (A) est présent en une proportion de 60 % à 40 % en poids, calculée par rapport à la quantité totale de (A) et (B).

9. Mélange de colorants selon la revendication 5, dans lequel ledit colorant (A) est présent en une proportion de 80 % à 20 % en poids, calculée par rapport à la quantité totale de (A) et (C).

10. Mélange de colorants selon la revendication 5, dans lequel ledit colorant (A) est présent en une proportion de 60 % à 40 % en poids, calculée par rapport à la quantité totale de (A) et (C).

11. Mélange de colorants selon la revendication 6, dans lequel ledit colorant (B) est présent en une proportion de 90 % à 80 % en poids, calculée par rapport à la quantité totale de (B) et (C).

12. Mélange de colorants selon la revendication 6, dans lequel ledit colorant (B) est présent en une proportion de 87 à 83 % en poids, calculée par rapport à la quantité totale de (B) et (C).

13. Composition de colorants liquides aqueuse, comprenant 25 à 50 % en poids d'un mélange de colorants selon l'une ou plusieurs des revendications 2 à 12, et 50 à 75 % en poids d'eau, ladite composition de colorants liquide ayant un pH d'environ 2,5 à 4,5 et étant sensiblement exempte de substances tampons.

14. Composition de colorants liquide aqueuse, comprenant 25 à 50 % en poids d'un mélange de colorants selon la revendication 4 et 50 à 75 % en poids d'eau, ladite composition de colorants liquide ayant un pH d'environ 2,5 à 4,5 et étant sensiblement exempte de substances tampons.

15. Composition de colorants liquide aqueuse, comprenant 25 à 50 % en poids d'un mélange de colorants selon la revendication 5 et 50 à 75 % en poids d'eau, ladite composition de colorants liquide ayant un pH d'environ 2,5 à 4,5 et étant sensiblement exempte de substances tampons.

16. Composition de colorants liquide aqueuse, comprenant 25 à 50 % en poids d'un mélange de colorants selon la revendication 6 et 50 à 75 % en poids d'eau, ladite composition de colorants liquide ayant un pH d'environ 2,5 à 4,5 et étant sensiblement exemptes de substances tampons.

**Patentansprüche**

1. Eine wasserlösliche Mischung von Monoazofarbstoffen mit einem ersten und einem zweiten Azofarbstoff, welche der allgemeinen Formel (1)

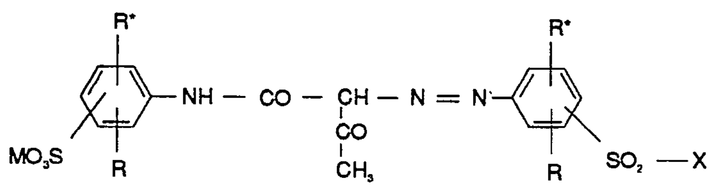

(1)

entsprechen, in welcher bedeuten:

R* ist jedes, unabhängig voneinander, ein Alkoxy von 1 bis 4 Kohlenstoffatomen,

R ist jedes, unabhängig voneinander, aus Alkyl von 1 bis 4 Kohlenstoffatomen und Alkoxy von 1 bis 4 Kohlenstoffatomen ausgewählt mit der Bedingung, daß in mindestens einem der beiden Farbstoffe mindestens einer der Reste R aus einem Alkyl von 1 bis 4 Kohlenstoffatomen ausgewählt ist,

X ist Vinyl oder ist eine Gruppe der allgmeinen Formel $-CH_2-CH_2-Z$, in welcher

Z Chlor, Brom, Sulfato, Thiosulfato, Phosphato oder Alkylamino mit einem Alkyl von 1 bis 4 Kohlenstoffatomen oder Dialkylamino mit Alkylgruppen von jeweils, unabhängig voneinander, 1 bis 4 Kohlenstoffatomen ist, und

M Wasserstoff oder vorzugsweise ein Alkalimetall ist.

2. Eine Farbstoffmischung nach Anspruch 1, worin die Reste R* sich in den 2- und 2'-Stellungen und die Reste R sich in den 5- und 5'-Stellungen befinden, die Gruppe $-SO_2-X$ in der 4'-Stellung und die Gruppe $MO_3S-$ in der 4-Stellung ist.

3. Eine Farbstoffmischung nach Anspruch 1 oder 2, worin Z Sulfato ist.

4. Eine Farbstoffmischung nach Anspruch 1, worin der erste Monoazofarbstoff die Formel (A)

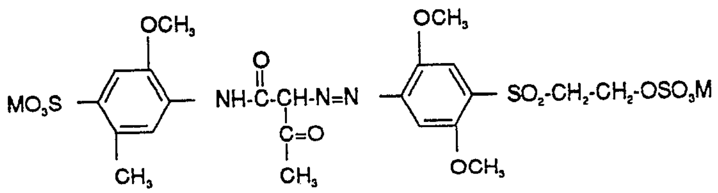

(A)

besitzt und der zweite Monoazofarbstoff die Formel (B)

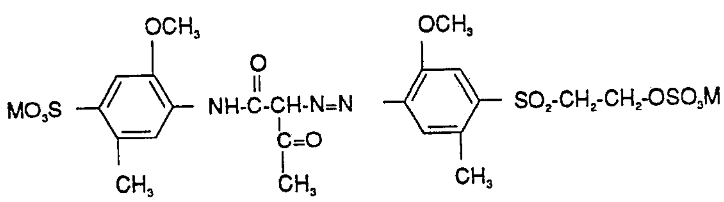

(B)

hat, worin M wie in Anspruch 1 definiert ist.

5. Eine Farbstoffmischung nach Anspruch 1, worin der erste Monoazofarbstoff die Formel (A)

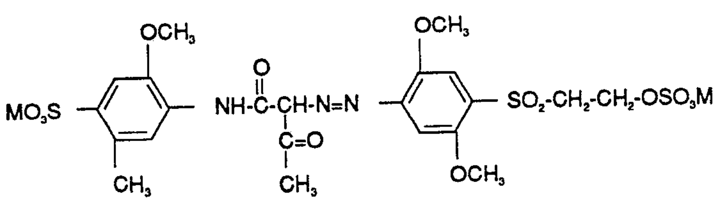

(A)

besitzt und der zweite Monoazofarbstoff die Formel (C)

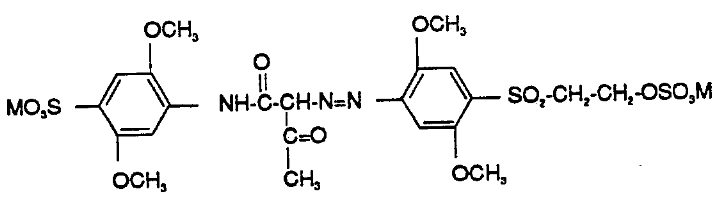

(C)

hat, worin M wie in Anspruch 1 definiert ist.

6. Eine Farbstoffmischung nach Anspruch 1, worin der erste Monoazofarbstoff die Formel (B)

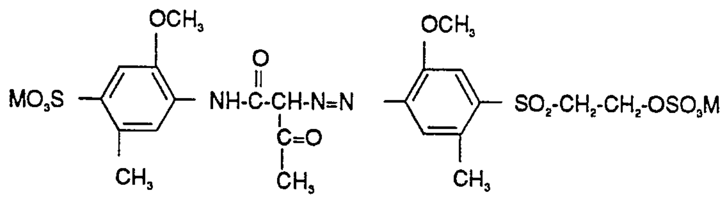

(B)

besitzt und der zweite Monoazofarbstoff die Formel (C)

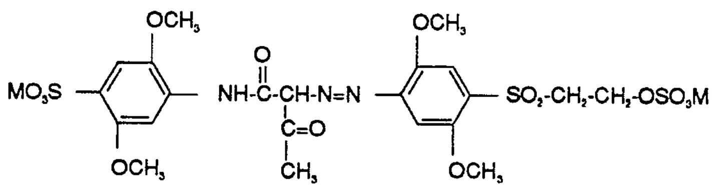

(C)

hat, worin M wie in Anspruch 1 definiert ist, und der Farbstoff (B) in einer Menge von 95 bis 80 Gew.-%, bezogen auf die Gesamtmenge von (B) und (C), vorliegt.

7. Eine Farbstoffmischung nach Anspruch 4, worin der genannte Farbstoff (A) in einer Menge von 80 bis 20 Gew.-%, bezogen auf die Gesamtmenge von (A) und (B), vorliegt.

8. Eine Farbstoffmischung nach Anspruch 4, worin der genannte Farbstoff (A) in einer Menge von 60 bis 40 Gew.-%, bezogen auf die Gesamtmenge von (A) und (B), vorliegt.

9. Eine Farbstoffmischung nach Anspruch 5, worin der genannte Farbstoff (A) in einer Menge von 80 bis 20 Gew.-%, bezogen auf die Gesamtmenge von (A) und (C), vorliegt.

10. Eine Farbstoffmischung nach Anspruch 5, worin der genannte Farbstoff (A) in einer Menge von 60 bis 40 Gew.-%, bezogen auf die Gesamtmenge von (A) und (C), vorliegt.

11. Eine Farbstoffmischung nach Anspruch 6, worin der genannte Farbstoff (B) in einer Menge von 90 bis 80 Gew.-%, bezogen auf die Gesamtmenge von (B) und (C), vorliegt.

12. Eine Farbstoffmischung nach Anspruch 6, worin der genannte Farbstoff (B) in einer Menge von 87 bis 83 Gew.-%, bezogen auf die Gesamtmenge von (B) und (C), vorliegt.

13. Eine wäßrige, flüssige Farbstoffpräparation mit 25 bis 50 Gew.-% einer Mischung von Farbstoffen gemäß einem oder mehreren der Ansprüche 2 bis 12 und mit 50 bis 75 Gew.-% Wasser und einem pH-Wert von etwa 2,5 bis 4,5, wobei die Farbstoffpräparation im wesentlichen von Puffersubstanzen frei ist.

14. Eine wäßrige, flüssige Farbstoffpräparation mit 25 bis 50 Gew.-% einer Mischung von Farbstoffen gemäß Anspruch 4 und mit 50 bis 75 Gew.-% Wasser und einem pH-Wert von etwa 2,5 bis 4,5, wobei die Farbstoffpräparation im wesentlichen von Puffersubstanzen frei ist.

15. Eine wäßrige, flüssige Farbstoffpräparation mit 25 bis 50 Gew.-% einer Mischung von Farbstoffen gemäß Anspruch 5 und mit 50 bis 75 Gew.-% Wasser und einem pH-Wert von etwa 2,5 bis 4,5, wobei die Farbstoffpräparation im wesentlichen von Puffersubstanzen frei ist.

16. Eine wäßrige, flüssige Farbstoffpräparation mit 25 bis 50 Gew.-% einer Mischung von Farbstoffen gemäß Anspruch 6 und mit 50 bis 75 Gew.-% Wasser und einem pH-Wert von etwa 2,5 bis 4,5, wobei die Farbstoffpräparation im wesentlichen von Puffersubstanzen frei ist.